(19) Europäisches Patentamt
European Patent Office
Office européen des brevets

(11) Veröffentlichungsnummer: **0 060 505**
**B1**

(12) # EUROPÄISCHE PATENTSCHRIFT

(45) Veröffentlichungstag der Patentschrift: **25.09.85**

(51) Int. Cl.⁴: **C 08 G 63/42,** C 08 G 63/58, C 08 G 59/42

(21) Anmeldenummer: **82101904.9**

(22) Anmeldetag: **10.03.82**

(54) **Mit Wasser verdünnbarer Polyester, Verfahren zu dessen Herstellung und dessen Verwendung.**

(30) Priorität: **14.03.81 DE 3109968**
**22.08.81 DE 3133319**

(43) Veröffentlichungstag der Anmeldung:
**22.09.82 Patentblatt 82/38**

(45) Bekanntmachung des Hinweises auf die Patenterteilung:
**25.09.85 Patentblatt 85/39**

(84) Benannte Vertragsstaaten:
**AT BE CH DE FR GB LI NL**

(56) Entgegenhaltungen:
**DE - A - 1 520 771**
**US - A - 3 196 119**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Walz, Gerd, Dr., Pfingstbornstrasse 99, D-6200 Wiesbaden (DE)**
Erfinder: **Wirth, Thaddäus, Dr., Kemeler Weg 6, D-6209 Heidenrod-Wisper (DE)**
Erfinder: **Sprenger, Walter, Ringstrasse 8, D-6110 Dieburg (DE)**

**EP 0 060 505 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Wasserverdünnbare Polyester, deren freie Carboxylgruppen mit Amin- oder Ammoniumbasen versalzt sind, sind bekannt. Diese Polyester werden in Kombination mit wasserverdünnbaren Aminharzen, z.B. Melamin- und/oder Harnstoffharzen, zu wärmehärtbaren Beschichtungsmaterialien verwendet. Solche Systeme enthalten in der Regel einen hohen Anteil organischer Lösungsmittel und sind daher wenig umweltfreundlich.

Andererseits sind wässrige Polyesterharzlösungen mit einem verhältnismässig geringen Anteil organischer Lösungsmittel bekannt. Diese Systeme sind jedoch wegen ihrer Hydrolyseanfälligkeit begrenzt lagerstabil. Ausserdem haben alle bisher bekannten wässrigen Systeme von Polyestern den Nachteil, dass sie sich beim Aufbringen auf Unterlagen durch Spritzen nur in geringen Schichtstärken zu blasenfreien Überzügen verarbeiten lassen.

Weiter sind wässrige Dispersionen von Polymerisaten, z.B. Hydroxylgruppen enthaltenden Acrylpolymeren, bekannt, die in Kombination mit wässrigen Aminharzen, z.B. Melaminharzen vom Typ Hexamethoxymethylmelamin oder dergleichen, zu Einbrennlacken verwendet werden können. Diese Kombinationen können jedoch wegen ungünstiger Pigmentbenetzung nur mit relativ geringen Anteilen an Pigmenten zu glänzenden Überzügen verarbeitet werden. Auch diese Systeme benötigen einen hohen Anteil an organischen Lösungsmitteln, um gutes Verlaufen, Pigmentbenetzung und andere günstige lacktechnische Eigenschaften zu gewährleisten. Sie sind daher ebenfalls mit einer Umweltbelastung verbunden.

Es war daher erwünscht, ein mit Wasser verdünnbares System herzustellen, das die vorstehenden Nachteile vermeidet.

Gegenstand der Erfindung ist ein mit Wasser verdünnbarer Polyester auf der Basis von

A) einer Dicarbonsäurekomponente,
B) mindestens einem Polycarbonsäuremonoanhydrid und
C) einer Alkohol-Komponente, die mindestens zweiwertige Alkohole aufweist,
wobei die freien COOH-Gruppen des Polyesters zumindest teilweise als Ammoniumsalze vorliegen, mit dem Kennzeichen, dass der hydrolysebeständige Polyester zusätzlich von
D) mindestens zwei Oxiranringe enthaltenden Epoxydverbindung der Gruppe epoxydierte Fettsäuren, deren Derivate und epoxydierte aliphatische einschliesslich cycloaliphatische Kohlenwasserstoffe, jeweils allein oder im Gemisch bzw. deren Gemischen mit Monoepoxyden, vorzugsweise bis zu 30%, wobei die Prozentangabe auf Epoxydgruppen bezogen ist, abgeleitet ist und dass das Polycarbonsäureanhydrid B) in Form eines Halbesters eingebaut ist und von Phthalsäureanhydrid und Maleinsäureanhydrid verschieden ist.

Zweckmässig ist in den erfindungsgemässen Polyestern ein Anteil von mindestens 50%, vorzugsweise 80% bis 100%, der Epoxydgruppen der Komponente D) verestert.

Geeignete Säurekomponenten für den Ausgangspolyester sind beispielsweise Phthalsäure, Terephthalsäure, Isophthalsäure, Tetrahydro- und/oder Hexahydrophthalsäure, Halogenphthalsäuren, wie Tetrachlor- bzw. Tetrabromphthalsäure, ferner deren Endomethylenderivate, wie Endomethylentetrahydrophthalsäure, Adipinsäure, Sebacinsäure, Fumarsäure, Maleinsäure oder Anhydride der genannten Säuren, sofern diese existieren, gegebenenfalls zusammen mit Monocarbonsäuren wie Benzoesäure, p-tert.-Butylbenzoesäure, Laurinsäure, Isononansäure, ungesättigte oder gesättigte Fettsäuren natürlich vorkommender Öle, jeweils einzeln oder im Gemisch. Geeignete Alkoholkomponenten dieser Polyester sind mehrwertige Alkohole, wie Äthylenglykol, die verschiedenen Propandiole, Butandiole, Pentandiole, Hexandiole, Neopentylglykol, Diäthylenglykol, Cyclohexandimethanol, Trimethylpentandiol, Trimethyloläthan oder -propan, Glycerin, Pentaerythrit, Dipentaerythrit, gegebenenfalls zusammen mit einwertigen Alkoholen, wie Butanol, Octanol, Laurylalkohol, Linoleylalkohol, jeweils einzeln oder im Gemisch. Die monofunktionellen Verbindungen werden jedoch jeweils nur in untergeordneten Anteilen pro Säure- bzw. Alkoholkomponente eingesetzt.

Geeignete Polycarbonsäureanhydride sind Trimellithsäureanhydrid, Tetrahydrophthalsäureanhydrid, Hexahydrophthalsäureanhydrid, Halogenphthalsäureanhydride, wie Tetra- und Hexachlor- bzw. -bromphthalsäureanhydrid, ferner deren Endomethylenderivate wie Hexachlor-endomethylentetrahydrophtalsäureanhydrid, Bernsteinsäure- und Glutarsäureanhydrid Trimellithsäureanhydrid und/oder Tetra- bzw. Hexahydrophthalsäureanhydrid sind bevorzugt.

Geeignete Aminbasen für die Salzbildung der COOH-Gruppen der erfindungsgemässen Polyesterharze sind z.B. solche der Formel

$$R^1-\underset{\displaystyle R^3}{\underset{|}{N}}-R^2 \qquad (I),$$

worin $R^1$, $R^2$ and$R^3$ jeweils gleich oder verschieden sind und Wasserstoff, Aralkyl mit 7 bis 9 C-Atomen, z.B. Benzyl, Alkyl mit 1 bis 8, vorzugsweise 1 bis 5 C-Atomen, Cycloalkyl mit bis zu 6 C-Atomen, wie Cyclohexyl oder Hydroxyalkyl mit 1 bis 5, vorzugsweise 1 bis 3 C-Atomen, bedeuten, ferner Morpholinverbindungen oder quartäre Ammoniumhydroxyde und/oder -salze von Monocarbonsäuren mit 1 bis 5, vorzugsweise 1 bis 3 C-Atomen. Beispielsweise seien genannt Ammoniak, Trimethyl-, Triäthyl-, Tributylamin, N-Dimethylcyclohexylamin, N-Dimethylbenzylamin, Dimethylaminoäthanol, Diäthanolamin. In manchen Fällen, z.B. um bestimmte Verarbeitungseigenschaften zu erzielen, kann es erforderlich sein, die salzbildenden organischen Basen im

Überschuss gegenüber den Carboxylgruppenäquivalenten des Polyesters zu verwenden. Bevorzugt sind Amine, die einen Hydroxyalkylrest enthalten.

Geeignete Epoxydverbindungen D leiten sich von mehrfach olefinisch-ungesättigten Fettsäuren, beispielsweise von Linolsäure oder Linolensäure ab, ferner von Estern von monoolefinischungesättigten Fettsäuren mit mehrwertigen Alkoholen, wie solchen der Ölsäure mit Glycerin. Geeignete epoxydierte Fettsäurederivate sind z.B. solche von Leinöl, Sojaöl, Alkylestern der Ricinen-, Sojaöl-, Linol-Fettsäure oder Arachidonsäure, oligomeren Fettsäuren und deren Estern. Bevorzugt sind epoxydiertes Leinöl und Sojaöl. Jedoch ist hierbei zu beachten, dass bei der einstufigen Umsetzung mit den Polyepoxyden vorzugsweise nur solche in Frage kommen, die neben den Epoxydgruppen noch mindestens eine Estergruppe aufweisen, gegebenenfalls zusammen mit Monoepoxyden.

Als epoxydierte aliphatische Kohlenwasserstoffe kommen beispielsweise in Frage solche mit 4 bis 20, vorzugsweise 4 bis 12 C-Atomen und einer Oxiranringzahl (pro Molekül) von 2 bis 6, vorzugsweise von 2 bis 4 sowie epoxydierte Polybutadienöle, deren C-Alkylierungsprodukte, z.B. Isoprenöle bzw. Homologe dieser Substanzen.

Der Anteil der Epoxydverbindungen kann beispielsweise 5 bis 40, vorzugsweise 10 bis 30 Gew.%, bezogen auf das Endprodukt, betragen.

Gegebenenfalls kann der Polyester auch zusätzlich auf der Basis mindestens eines eingebauten Monoepoxyds hergestellt sein. Geeignete Monoepoxyde sind z.B. epoxydierte Kohlenwasserstoffe, wie Äthylen-, Propylen-, Butylenoxyd, Styroloxyd, Cyclohexenvinyl-monooxyd, Dipentenmonooxyd, α-Pinenoxyd, ferner Butylglycidyläther, Allylglycidyläther, Phenylglycidyläther, p-Butylphenolglycidyläther, Kresylglycidyläther, 3-(Pentadecyl)-phenol-glycidyläther, ferner Glycidylester, wie solche von gesättigten, in α-Stellung ein- oder zweifach verzweigten Monocarbonsäure, oder Glycidylmethacrylat.

Im Rahmen der Erfindung liegt auch ein Verfahren zur Herstellung der Polyester, das dadurch gekennzeichnet ist, dass

a) in erster Stufe ein Polyester mit einer Säurezahl von 2 bis 100, vorzugsweise 2 bis 30 aus einer Säurekomponente, die A) mindestens eine Dicarbonsäure bzw. deren Anhydrid enthält, D) mindestens einer Epoxydverbindung, die mindestens 2 Oxiranringe enthält, der Gruppe epoxydierte Fettsäuren, deren Derivate und epoxydierte aliphatische Kohlenwasserstoffe, oder deren Gemisch mit bis zu 30% Monoepoxyden, und C) mindestens einer Alkoholkomponente, die mindestens zweiwertige Alkohole enthält, hergestellt wird,

b) dass darauf der Polyester, sofern er eine Säurezahl von mindestens 15 hat, in zweiter Stufe mit einem Monoepoxyd und/oder mit einem Polyepoxyd, das neben den Epoxydgruppen noch mindestens eine Estergruppe aufweist, unter Bildung eines Polyesters mit einer Säurezahl von weniger als 15, und sofern er schon eine Säurezahl von weniger als 15 hat, in zweiter Stufe gegebenenfalls mit einem Monoepoxyd und/oder einem Polyepoxyd, das neben den Epoxydgruppen noch mindestens eine Estergruppe aufweist, umgesetzt wird,

c) dass der in erster oder zweiter Stufe gebildete Polyester mit einer Säurezahl von weniger als 15 mit B) mindestens einem anderen Polycarbonsäuremonoanhydrid als Phthalsäureanhydrid und Maleinsäureanhydrid bei einer Temperatur von Raumtemperatur bis 170°C, vorzugsweise 50 bis 140°C unter Bildung eines Halbesters des Monoanhydrids umgesetzt wird,

d) dass in einer weiteren Stufe die freien COOH-Gruppen des gebildeten Halbesters mit einem Amin, vorzugsweise einem tertiären Amin oder tertiären Aminalkohol in das entsprechende Ammoniumsalz übergeführt werden, und

e) dass darauf das unter d) erhaltene Produkt als solches gewonnen oder in einer weiteren Stufe mit einem Lösungsmittel, vorzugsweise Wasser, verdünnt wird.

Das vorliegende Verfahren verläuft glatt und die nach diesem Verfahren hergestellten Produkte haben den Vorteil, dass sie beim Lagern in wässrigem Medium überraschenderweise eine verhältnismässig geringe Hydrolyseanfälligkeit zeigen. Ausserdem sind sie mit wasserlöslichen bzw. wasserverdünnbaren Mono- und Polyepoxyden und wasserlöslichen Aminharzen verträglich.

Vorzugsweise wird in Stufe c) mit Trimellithsäureanhydrid und/oder mit einem zumindest teilweise hydrierten Anhydrid einer aromatischen Dicarbonsäure, z.B. Hexa- und/oder Tetrahydrophthalsäure, umgesetzt.

Die Kondensation in Stufe a) wird gewöhnlich bei einer Temperatur von mindestens 170, vorzugsweise 190 bis 230°C, durchgeführt. Dieser Bereich ist deshalb von Interesse, weil hierbei die Reaktion zwischen den Carboxylgruppen der Polycarbonsäure A) und den Epoxydgruppen der Epoxydverbindung D) glatt und vollständig verläuft. Auf diese Weise entstehen modifizierte Polyester, bei denen die Epoxydverbindungen über die Epoxydgruppen in die Polymerenkette eingebaut werden.

Als Polyepoxyde, die in Stufe b) umgesetzt werden, eignen sich die obengenannten.

Nach einer vorteilhaften Ausführungsform der Erfindung kann in erster Stufe ein Polyester aus der Säurekomponente und der Alkoholkomponente, jeweils gemäss Merkmal a), und einen solchen Anteil der Epoxydverbindung D) in Form eines Polyepoxyds, das neben den Epoxydgruppen noch mindestens eine Estergruppe aufweist, allein oder im Gemisch mit mindestens einem Monoepoxyd hergestellt werden, wobei der Polyester eine Säurezahl von weniger als 15 aufweist. Darauf wird das Verfahren unter Weglassen der Stufe b) in Stufe c) weitergeführt.

Die Polyester sind ohne Lösungsmittelzusatz mit Wasser beliebig verdünnbar, ohne auszuflokken. Sie sind trotzdem hydrolysebeständig. Sie können daher zweckmässig in Form einer wässrigen Lösung, gegebenenfalls auch im Gemisch mit wasserlöslichen oder wasserunlöslichen Lösungsmitteln vorliegen. Die wässrigen Lösungen der erfindungsgemässen Polyester sind in der Regel klare bis milchig trübe, je nach ihrem chemischen Aufbau niedrig- bis hochviskose Flüssigkeiten von ausgezeichneter Lagerstabilität. Ihr Festkörpergehalt ist in weiten Grenzen variierbar. Sie können aber auch pastösen Charakter haben. Sie können mit einem hohen Anteil an Pigmenten und/oder Füllstoffen vermischt werden. Dabei zeigen die Polyester ausserordentlich gute Benetzungseigenschaften.

Da die erfindungsgemässen Polyester bzw. die nach dem erfindungsgemässen Verfahren erhaltenen Produkte überraschenderweise mit speziellen wasserverdünnbaren Epoxyden, vor allem Polyepoxyden, allein oder in Kombination mit Aminharzen, insbesondere solchen vom wasserverdünnbaren Typ, vor allem solchen vom Typ Hexamethoxymethylmelamin, Harnstoffharzen oder dergleichen, verträglich sind, lassen sie sich als Bindemittel in wässrigen oder in mit Wasser verträglichen Medien, gegebenenfalls allein oder in Kombination mit solchen wasserverdünnbaren Aminharzen und/oder solchen Epoxyden, verwenden. Insbesondere sind die erfindungsgemässen Polyester mit solchen modifizierten Epoxyden verträglich, die frei von Glycidylester- und -äthergruppen sind und die ausser mindestens einer Epoxydgruppe mindestens eine Estergruppe einer Monocarbonsäure und eine dieser benachbarte weitere Estergruppe enthalten, die durch Umsetzung einer OH-Gruppe mit einem Polycarbonsäuremonoanhydrid entstanden ist, wobei die aus dem Anhydrid bei der Veresterung gebildete zweite COOH-Gruppe ganz oder teilweise in Form eines Salzes einer Base vorliegt (vergleiche EP-A-60 506 vom gleichen Tage entsprechend deutscher Patentanmeldung P 31 09 900.9).

Das Gewichtsverhältnis der erfindungsgemässen Polyesterharze zum Vernetzungspartner, z.B. den wasserverdünnbaren Aminharzen und/oder Epoxyden, kann in weiten Grenzen variiert werden, z.B. von 99:1 bis 1:99, vorzugsweise 90:10 bis 50:50. Nach einer Ausführungsform der Erfindung wird eine Vernetzer-Kombination der wasserverdünnbaren Aminharze und der wasserverdünnbaren Epoxyde, vorzugsweise der Polyepoxyde im Gewichtsverhältnis von 90:10 bis 10:90, insbesondere 50:10 bis 10:50, eingesetzt.

Durch die erfindungsgemässe Modifizierung der Polyester unter Einbau der Epoxydverbindungen erzielt man besonders wertvolle Produkte, die sich durch Zusatz geeigneter Vernetzer, z.B. Aminharzen und/oder wasserverdünnbaren Epoxyden, zu hochelastischen und chemisch beständigen Produkten mit hoher mechanischer Festigkeit härten lassen. Diese Produkte sind z.B. beständig gegen Witterungseinflüsse wie UV-Strahlung, Alkali, organische Lösungsmittel wie Aceton, Alkohole, Aromaten wie Benzol, Toluol, Xylol.

Mit Bindemitteln aus den erfindungsgemässen Polyestern können unpigmentierte, pigmentierte oder mit anderen Füllstoffen versehene Beschichtungsmaterialien, z.B. Lacke, hergestellt werden, die nach der Härtung Überzüge mit ausgezeichneten mechanischen Eigenschaften liefern.

Insbesondere finden die erfindungsgemässen Polyester Verwendung zur Herstellung von gehärteten Überzügen, vor allem solchen, die über 60°C eingebrannt werden. In vielen Fällen erhält man bereits unter milden Bedingungen, also schon bei 60 bis 120°C und natürlich erst recht bei höherer Temperatur, z.B. ab 120°C eine ausgezeichnete Vernetzung. Durch weitere Temperaturerhöhung, z.B. 140 bis 190°C kann die Härtungszeit ausserordentlich verkürzt werden. Die erfindungsgemässen Produkte lassen sich auch unter Schocktrocknungsbedingungen, wie sie beispielsweise bei Coil- oder Can-Coating-Verfahren verwendet werden, härten, also bei Temperaturen von 200 bis 350°C und extrem kurzen Zeiten, z.B. 10 Sekunden bis 3 Minuten, wobei man ausgezeichnete Beschichtungen erhält.

Zur Beschleunigung der Vernetzung bzw. zur Senkung der Härtungstemperaturen kann es zweckmässig sein, der Mischung, sofern sie wasserverdünnbare Epoxyde enthält, einen Katlysator in einem Anteil von bis zu 10 Gew.%, vorzugsweise 0,01 bis 5 Gew.%, bezogen auf Festkörpergehalt, zuzusetzen. Geeignet sind z.B. basische Katalysatoren wie Diazabicyclooctan, Diazabicyclononen bzw. -undecen, Imidazolderivate, wie 3-Methyl-, 2-Phenyl- oder Cyclohexylimidazol, Trialkylamine, wie Triäthyl-, Tributyl-, Tricyclohexylamin, N-Alkylpiperidine, N,N'-Dialkylpiperazine, Trialkyl- bzw. Triaryl-phosphine, N,N'-Tetraalkylaminoalkyl-oxamide, N-Dialkylamino-alkyl-oxamidsäurealkylester, ferner Amine, Hydroxyde, Carbonate und Salze organischer Säuren der Alkalimetalle, wie Lithiumhydroxyd, Kaliumcarbonat, Lithiumbenzoat, ferner deren Additionsprodukte mit Kronenäthern oder ähnlichen Liganden. Aber auch Alkali- und/oder Erdalkalisalze polymerer Säuren, wie sie in der Europ. Patentanmeldung 81 109 175.0 beschrieben sind, sowie quartäre Ammoniumverbindungen, wie Cholin, Tetrabutylammonium-Jodid, -Chlorid, -Bromid, -Hydroxyd, Tetramethylammonium-Chlorid, Bromid, -Jodid, -Hydroxyd, sind wirksame Katalysatoren für die erfindungsgemässen Beschichtungsmaterialien.

Es ist ein besonderer Vorteil der Erfindung, dass mit Systemen auf Basis der erfindungsgemässen Polyester hochelastische Beschichtungen erhalten werden, die eine einwandfreie Oberfläche aufweisen, d.h. dass sie nach dem Härtungsvorgang auch bei höheren Schichtstärken blasenfrei sind.

Es besteht auch die Möglichkeit, die erfindungsgemässen Polyester mit Polymerisatdispersionen zu kombinieren, z.B. Dispersionen von Hydroxylgruppen enthaltenden Acrylpolymeren

und mit wasserverdünnbaren Aminharzen und/oder wasserverdünnbaren Polyepoxyden zu vernetzen. Auch derartige Systeme lassen sich ohne Schwierigkeit zu gehärteten Überzügen mit einwandfreiem Aussehen und ausgezeichneten lacktechnischen Eigenschaften verarbeiten.

Die Kombinationen auf Basis der erfindungsgemässen Polyester, die also aus den Polyestern und den modifizierten Epoxyden und/oder den Aminharzen als Vernetzern bestehen, lassen sich auf die verschiedensten Unterlagen aufbringen, sofern diese den Härtungstemperaturen des Überzugs standhalten. Geeignete Unterlagen sind z.B. Keramik, Holz, Glas, Beton, Kunststoffe, vorzugsweise Metall, wie Eisen, Zink, Titan, Kupfer, Aluminium, Stahl, Messing, Bronze, Magnesium oder dergleichen, wobei die Unterlagen gegebenenfalls noch durch geeignete mechanische und/oder chemische Vorbehandlung haftfreudiger bzw. korrosionsbeständiger gemacht werden können. Jedoch haften die erfindungsgemässen Überzugsmittel ausgezeichnet auf den verschiedensten Metallunterlagen ohne haftvermittelnde Grundierung bzw. Zwischenschicht. Die gute Haftung dieser Lackierungen entspricht den Werten GT OA bis GT 1A nach den Prüfvorschriften gemäss DIN 53 151.

Die erfindungsgemässen wässrigen Polyester-Kombinationen sind für die Herstellung von korrosionsschützenden Überzügen und/oder Zwischenbeschichtungen für die verschiedensten Anwendungsgebiete geeignet, insbesondere als resistente Lackierungen und Mattlackierungen. Weiter eignen sie sich für die Beschichtung und Auskleidung von Gegenständen, die mit Treibstoffen und Lösungsmitteln in Berührung kommen, ausserdem für Schutzüberzüge gegen atmosphärische Einflüsse, wie Bauteile für elektrotechnische Zwecke bzw. deren Elemente, insbesondere für elektrische Leiter, sowie für Beschichtungen von thermisch beanspruchten Gegenständen.

Aufgrund ihrer günstigen Eigenschaften sind die Kombinationen der erfindungsgemässen Polyester auch hervorragend für die einschichtlakkierung geeignet. Je nach Wahl der Komponenten können mit den erfindungsgemässen Mitteln beschichtete Bleche nachträglich durch Tiefziehen, Abkanten, Profilieren, Prägen oder dergleichen ohne nennenswerte Beeinträchtigung der übrigen günstigen Eigenschaften verformt werden. Die haftende Überzugsschicht kann unverändert bleiben, sie kann aber auch als Zwischenschicht, also als Unterlage für weitere Überzüge, dienen, die wiederum aus demselben oder einem anderen üblichen Beschichtungsmaterial bestehen können.

Die erhaltenen Überzüge stellen je nach Wunsch glänzende oder matte Filme mit ausgezeichneter mechanischer und chemischer Beständigkeit und mit guter Wetterstabilität dar. Andererseits ist es auch möglich, Mattlacke mit hervorragenden mechanischen und chemischen Eigenschaften herzustellen. Hierfür ist überraschenderweise kein hoher Anteil an Pigmenten und Füllstoffen erforderlich.

Eine weitere Verwendung der genannten Kombinationen der erfindungsgemässen Polyester besteht in ihrer Eignung als vernetzbares Harz mit emulgierender Wirkung oder Schutzkolloide, Verdickungs- bzw. Thixotropiermittel für wässrige Dispersionen von Polymerisations- und Kondensationskunstharzen. Wegen ihrer guten Verdünnbarkeit und ihrer anderen günstigen Eigenschaften eignen sich diese Kombinationen auch zur Verwendung für die Elektrotauchlackierung.

Eine weitere Möglichkeit ist die Verwendung der Kombinationen der erfindungsgemässen Polyester für mit Wasser verdünnbare Klebstoffe. Auch als Bindemittel für textile, organische und/oder anorganische Materialien sind sie einsetzbar. Sie sind auch zur Verwendung für härtbare Formmassen, Giessharze, Kitte, zellige oder poröse Stoffe, wie Schaumstoffe, und als Isolierlack geeignet.

In den folgenden Vorschriften und Beispielen bedeuten jeweils, wenn nicht anders angegeben, T Gewichtsteile, % Gewichtsprozent, SZ Säurezahl und OHZ Hydroxylzahl. Als Monoepoxyd wird jeweils ein Glycidylester einer in α-Stellung verzweigter Monocarbonsäure mit 10 bis 12 C-Atomen umgesetzt.

## Beispiele

I) Herstellung der Polyester

1A) In einem 2 l-Glaskolben, ausgestattet mit Rückflusskühler, Wasserabscheider, Rührer, Kontaktthermometer und Heizvorrichtung, werden 732 T Phthalsäureanhydrid, 572 T Neopenthylglykol, 55 T Trimethylolpropan, 130 T epoxydiertes Sojaöl mit einem Epoxydäquivalentgewicht von 260 und 80 bis 100 T Toluol eingewogen und auf 220°C unter leichtem Rückfluss und Inertgasatmosphäre erhitzt. Nach ca. 8 Stunden Laufzeit erhält man einen Polyester mit der SZ 15.

Anschliessend wird auf 120°C abgekühlt und nach Abdestillieren von Toluol 96 T Monoepoxyd zugegeben. Nach weiteren 4 Stunden bei 120°C wird die Reaktionsmischung auf Umgebungstemperatur abgekühlt. SZ des Produkts ist jetzt $<2$.

B) In einem 2 l-Glaskolben, versehen mit Rückflusskühler, Kontaktthermometer, Heizvorrichtung und Rührer werden 300 T des erhaltenen Polyesters und 28,1 T Trimellithsäureanhydrid unter Inertgasatmosphäre 3 bis 4 Stunden auf 120 bis 130°C erhitzt, bis eine Säurezahl von ca. 50 erreicht ist. Danach wird das Gemisch auf 90°C abgekühlt und mit 22,7 T Dimethylaminoäthanol versetzt. Die Reaktionsmischung wird anschliessend mit 350 T entionisiertem Wasser verdünnt. Man erhält eine klare Lösung, pH = 6,1, Festkörpergehalt 50%.

2) Im Reaktionsgefäss von Beispiel 1A) werden 722 T Phthalsäureanhydrid, 578 T Neopentylglykol, 36,7 T Trimethylolpropan und 173,3 T epoxydiertes Sojaöl (siehe Beispiel 1A)) nach dem

gleichen Verfahren wie dort umgesetzt. Man erhält einen Polyester mit der SZ 14.

Nach der Reaktion mit 89 T Monoepoxyd hat der Polyester eine SZ <2. 600 T dieses Polyesters werden wie nach Beispiel 1B) mit 56,2 T Trimellithsäureanhydrid bis zur SZ 51 umgesetzt. Anschliessend erfolgt die Salzbildung mit 45,4 T Dimethylaminoäthanol. Man verdünnt mit Wasser auf eine 55%ige klare Harzlösung, pH-Wert 7.

3) 682 T Phthalsäureanhydrid, 579 T Neopentylglykol, 37 T Trimethylolpropan und 173 T epoxydiertes Sojaöl (siehe Beispiel 1A)) werden wie nach Beispiel 1A) bis zur SZ 15 umgesetzt. Anschliessend erfolgt die Umsetzung mit 94 T Monoepoxyd zu einem Polyester der SZ 1,6. 600 T dieses Polyesters werden mit 56 T Trimellithsäureanhydrid wie nach Beispiel 1B) umgesetzt. Das Produkt (SZ 51) wird anschliessend mit 46 T Dimethylaminoäthanol versalzt und mit entionisiertem Wasser auf einen Festkörpergehalt von 55% eingestellt. Die wässrige Polyesterlösung ist klar, pH 6,6.

4) Aus 722 T Phthalsäureanhydrid, 579 T Neopentylglykol, 75 T Trimethylolpropan, 251 T epoxydiertem Sojaöl (siehe Beispiel 1A)) und 105 T Monoepoxyd wird wie nach Beispiel 1 ein Polyester, SZ <2, OH-Z 107, hergestellt.

600 T dieses Polyesters werden mit 56 T Trimellithsäureanhydrid wie nach Beispiel 1B) umgesetzt. Das Reaktionsgemisch (SZ 50) wird anschliessend mit 46 T Dimethylaminoäthanol versalzt und mit entionisiertem Wasser auf 55% Festkörpergehalt eingestellt. Die wässrige Polyesterlösung ist klar, pH 7,6.

5) Man setzt 722 T Phthalsäureanhydrid, 579 T Neopentylglykol, 150 T Trimethylolpropan, 251 T epoxidiertes Sojaöl (siehe Beispiel 1A)) und 108 T Monoepoxyd zum Polyester der SZ 2, OH-Z 168 um. 600 T dieses Polyesters werden mit 56 T Trimellithsäureanhydrid wie nach Beispiel 1B) umgesetzt. Das Produkt hat die SZ 51. Anschliessend erfolgt Salzbildung mit 45 T Dimethylaminoäthanol. Mit entionisiertem Wasser wird auf 55% Festkörpergehalt verdünnt. Die Harzlösung ist klar, pH 7,2.

6) Aus 762 T Phthalsäureanhydrid, 667 T Neopentylglykol, 317 T Isoalkylepoxystearat (Epoxydäquivalentgewicht = 500) wird ein Polyester, SZ 12,5, hergestellt und anschliessend mit 100,9 T Monoepoxyd zu einem Produkt der SZ <2, OH-Z 93, umgesetzt. 300 T dieses Polyesters werden wie nach Beispiel 1 mit 31 T Trimellithsäureanhydrid zu einem Polyester der SZ 56, umgesetzt. Anschliessend erfolgt Salzbildung mit 23 T Dimethylaminoäthanol. Mit entionisiertem Wasser wird auf 50% Festkörpergehalt verdünnt. Die Polyesterlösung ist opak bis leicht trüb, pH = 6,4.

7) Aus 732 T Phthalsäureanhydrid, 572 T Neopentylglykol, 27,5 T Trimethylolpropan, 20,9 T Pentaerythrit, 130 T epoxydiertem Sojaöl (siehe Beispiel 1) wird wie nach Beispiel 1A) ein Polyester der SZ 16,1 hergestellt, der anschliessend mit 102 T Monoepoxyd bis zu einer SZ <2 weiter umgesetzt wird. 300 T dieses Polyester werden wie nach Beispiel 1 mit 28 T Trimellithsäureanhydrid umgesetzt zum Produkt der SZ 48. Anschliessend erfolgt Salzbildung mit 22,7 T Dimethylaminoäthanol. Man verdünnt mit entionisiertem Wasser auf 50% Festkörpergehalt. Die Polyesterlösung ist opak bis leicht trüb, pH = 7,5.

8) Wie nach Beispiel 1 wird aus 732 T Phthalsäureanhydrid, 572 T Neopentylglykol, 55 T Trimethylolpropan, 130 T epoxydiertem Leinöl (Epoxydäquivalentgewicht 179) ein Polyester der SZ 14 hergestellt und anschliessend mit 89 T Monoepoxyd bis zu SZ <2 umgesetzt. 300 T dieses Polyester werden wie nach Beispiel 1 mit 28 T Trimellithsäureanhydrid umgesetzt. Die Weiterverarbeitung erfolgt nach Beispiel 7. Die 55%ige wässrige Polyesterlösung ist trübe, pH 6,9.

9) 600 T des Monoepoxyd-Umsetzungsproduktes aus Beispiel 3 werden wie nach Beispiel 1B) mit 89 T Hexahydrophthalsäureanhydrid bis zur SZ 49 umgesetzt. Anschliessend erfolgt Salzbildung mit 44 T Dimethylaminoäthanol. Man verdünnt mit entionisiertem Wasser auf 55% Festkörpergehalt. Die wässrige Polyesterlösung ist opak bis leicht trüb, pH 7,1.

10) 600 T des Monoepoxyd-Umsetzungsproduktes aus Beispiel 2 werden wie nach Beispiel 1B) mit 60,2 T Bernsteinsäureanhydrid umgesetzt. Das Reaktionsgemisch, SZ 50,8, wird anschliessend mit 45 T Dimethylaminoäthanol versalzt und mit entionisiertem Wasser auf 55% Festkörpergehalt eingestellt. Die wässrige Polyesterlösung ist opak bis leicht trüb, pH 7,3.

11) Wie nach Beispiel 1 wird aus 732 T Phthalsäureanhydrid, 572 T Neopentylglykol, 55 T Trimethylolpropan, 134 expoxydiertem Polybutadienöl (Epoxydäquivalentgewicht = 267) ein Polyester mit einer SZ 14,5 hergestellt, der anschliessend mit 97 T Monoepoxyd zum Produkt der SZ <2 umgesetzt wird. 300 T dieses Produktes werden wie nach Beispiel 1 mit 28,3 T Trimellithsäureanhydrid umgesetzt. Das Reaktionsprodukt SZ 51,2 wird anschliessend mit 23 T Dimethylaminoäthanol versalzt und mit entionisiertem Wasser auf 50% Festkörpergehalt eingestellt. Die wässrige Polyesterlösung ist opak bis leicht trüb, pH 6,3.

12 A) In einem 2 l-Glaskolben, ausgestattet mit Rückflusskühler, Wasserabscheider, Rührer, Kontaktthermometer und Heizvorrichtung, werden 702 T Phthalsäureanhydrid, 579 T Neopentylglykol, 75 T Trimethylolpropan, 211 T epoxydiertes Sojaöl mit einem Epoxydäquivalentgewicht von 260 und 80 bis 100 T Toluol eingewogen und unter leichtem Rückfluss und Inertgasatmosphäre auf 200°C erhitzt, bis die Säurezahl ca. 15 ist. (Reaktionszeit: ca. 11 bis 12 Stunden).

Anschliessend werden 110 T epoxydiertes Sojaöl mit einem Epoxydäquivalentgewicht von 260 zugegeben. Nach weiteren 4 Stunden bei 200°C wird die Reaktionsmischung auf Umgebungstemperatur abgekühlt. Säurezahl des Produkts ist jetzt ca. 4.

B) In einem 2 l-Glaskolben, versehen mit rückflusskühler, Kontaktthermometer, Heizvorrichtung und Rührer werden 700 T des erhaltenen Polyesters und 60 T Trimellithsäureanhydrid unter Inertgasatmosphäre 3 bis 4 Stunden auf 120 bis

130°C erhitzt, bis eine Säurezahl von ca. 50 erreicht ist. Danach wird das Gemisch auf 90°C abgekühlt und mit 53 T Dimethylaminoäthanol versetzt. Die Reaktionsmischung wird anschliessend mit 663 T entionisiertem Wasser verdünnt. Man erhält eine klare Lösung, pH = 6,9, Festkörpergehalt 55%.

13) In einem Reaktionsgefäss von Beispiel 12A werden 722 T Phthalsäureanhydrid, 579 T Neopentylglykol, 75 T Trimethylolpropan und 211 T epoxydiertes Sojaöl (siehe Beispiel 12A) nach dem gleichen Verfahren wie dort umgesetzt. Man erhält einen Polyester mit der Säurezahl 13,7.

Nach der Reaktion mit 110 T expoxydiertem Sojaöl in gleicher Verfahrensweise wie in Beispiel 12A hat der Polyester eine Säurezahl von 4.

700 T dieses Polyesters werden wie nach Beispiel 12B mit 60 T Trimellithsäureanhydrid bis zur Säurezahl 51 umgesetzt. Anschliessend erfolgt die Salzbildung mit 52,8 T Dimethylaminoäthanol. Man verdünnt mit deionisiertem Wasser auf eine 50%ige Lösung, pH 6,5.

14) In einem Reaktionsgefäss wie nach Beispiel 12A werden 702 T Phthalsäureanhydrid, 579 T Neopentylglykol, 75 T Trimethylolpropan und 291 T epoxydiertes Sojaöl (siehe Beispiel 12A) nach dem gleichen Verfahren wie dort umgesetzt. Man erhält einen Polyester mit der Säurezahl 15.

Nach der Reaktion mit 111 T epoxydiertem Sojaöl in gleicher Verfahrensweise wie nach Beispiel 12A hat der Polyester eine Säurezahl von 5,6.

700 T dieses Polyesters werden wie nach Beispiel 12B) mit 58 T Trimellithsäureanhydrid bis zur Säurezahl 50 umgesetzt. Anschliessend erfolgt die Salzbildung mit 53 T Dimethylaminoäthanol. Man verdünnt mit deionisiertem Wasser auf eine 55%ige Lösung, pH 6,4.

15) 722 T Phthalsäureanhydrid, 579 T Neopentylglykol, 75 T Trimethylolpropan, 211 T epoxydiertes Sojaöl (siehe Beispiel 12A) und 82 T Ricinenfettsäure werden nach dem gleichen Verfahren wie nach Beispiel 12A) umgesetzt. Man erhält einen Polyester mit der Säurezahl 15,4.

Nach der Reaktion mit weiteren 110 T epoxydiertem Sojaöl in gleicher Verfahrensweise wie nach Beipiel 12A) hat der Polyester eine Säurezahl von 6,8.

700 T dieses Polyesters werden wie nach Beispiel 12B) mit 56 T Trimellithsäureanhydrid bis zur Säurezahl 52 umgesetzt. Anschliessend erfolgt die Salzbildung mit 53 T Dimethylaminoäthanol. Man verdünnt mit entionisiertem Wasser auf eine 55%ige Lösung, pH 6,8.

16) In einem Reaktionsgefäss wie nach Beispiel 12A) werden 722 T Phthalsäureanhydrid, 579 T Neopentylglykol, 75 T Trimethylolpropan, 211 T epoxydiertes Sojaöl (siehe Beispiel 12A) und 82 T Isononansäure wie nach Beispiel 12A) umgesetzt. Man erhält einen Polyester mit der Säurezahl 15,7.

Nach der Reaktion mit 110 T epoxydierten Sojaöl in gleicher Verfahrensweise wie nach Beispiel 12A) hat der Polyester eine Säurezahl von 4,3.

700 T dieses Polyesters werden nach Beispiel 12B) mit 60 T Trimellithsäureanhydrid bis zur Säurezahl 49,4 umgesetzt. Anschliessend erfolgt die Salzbildung mit 53 T Dimethylaminoäthanol. Man verdünnt mit entionisiertem Wasser auf eine 50%ige Lösung, pH 6,7.

17) In einem Reaktionsgefäss, wie nach Beispiel 12A) werden 682 T Phthalsäureanhydrid, 579 T Neopentylglykol, 75 T Trimethylolpropan und 321 T epoxydiertes Sojaöl mit einem Epoxydäquivalentgewicht von 260 und 80 bis 100 T Toluol eingewogen und unter leichtem Rückfluss und Inertgasatmosphäre auf 220°C erhitzt. Nach einer Reaktionszeit von 24 Stunden wird die Reaktionsmischung auf Umgebungstemperatur abgekühlt. Säurezahl des Polyesters (nach Abzug von Toluol) ist jetzt 4,9.

600 T Polyester werden wie nach Beispiel 12B) mit 51 T Trimellithsäureanhydrid bis zur Säurezahl 49,8 umgesetzt. Anschliessend erfolgt die Salzbildung mit 45 T Dimethylaminoäthanol. Man verdünnt mit deionisiertem Wasser auf eine 55%ige Lösung, pH 6,6.

In den nachstehenden Beispielen ist jeweils eine 50%ige Polyesterlösung eingesetzt.

Als Epoxydkomponente wird stets eine 40%ige Lösung eines Epoxyds, vorzugsweise Polyepoxyds verwendet. Hierfür dient ein modifiziertes Epoxyd, das frei von Glycidylester- und -äthergruppen ist und wobei die zweite COOH-Gruppe ganz oder teilweise in Form eines Salzes einer Base vorliegt, wie es in der EP-A-60 506 vom gleichen Tag (entsprechend deutscher Anmeldung P 31 09 900.9) beschrieben ist.

Das Melaminharz besteht aus Hexamethoxymethylmelamin.

II) Herstellung von Überzügen

18) bis 24), 27) bis 29 und 32 bis 40)

Nach Beispielen 18 bis 24, 27 bis 29 und 32 bis 40 (siehe Tabelle 1) wird folgendermassen verfahren:

Die angegebene Menge von Lösung der erfindungsgemässen Polyester wird mit der angegebenen Menge einer wässrigen Lösung von Polyepoxyd gemischt. Anschliessend wird die dem Gesamtfestkörpergehalt der Mischung entsprechende Menge an Titandioxyd zugemischt und das Gemisch auf einer Perlmühle abgerieben. Das Gemisch wird dann mit Melaminharz versetzt, homogenisiert und anschliessend mit entionisiertem Wasser auf eine Spritzviskosität von 18 s im 4 mm-DIN-Becher eingestellt. Nach einer Ruhezeit von drei Tagen werden die Lacke mit Sprühpistolen auf phosphatierte Stahlbleche aufgespritzt.

Die beschichteten Prüfbleche werden zunächst 20 Minuten bei Raumtemperatur abgelüftet. Anschliessend erfolgt die Härtung unter den in Tabelle 2 aufgeführten Härtungsbedingungen.

25) und 30)

Nach Beispielen 25 und 30 wird analog gearbeitet, jedoch erfolgt die Pigmentdispergierung nur im Polyesterharz-Medium. Die Trockenfilmdicke der Beschichtungen beträgt in allen Fällen etwa 40 µm.

26) 50 T der 50%igen Polyesterlösung aus Beispiel 3 werden mit 62,5 T der wässrigen Epoxydlösung nach Beispiel 1 der EP-A-60 506 vom gleichen Tag (entsprechend deutscher Anmeldung P 31 09 900.9) gemischt und der pH-Wert mit Dimethylaminoäthanol auf pH = 8,0 eingestellt. Dann werden 100 T Titandioxyd zugemischt. Das Gemisch wird auf einer Perlmühle abgerieben. Anschliessend werden 100 T einer 50%igen Hydroxyl- und Carboxylgruppen enthaltenden Acrylatdispersion auf der Basis 21 von Butylacrylat, Methylmethacrylat, Hydroxyäthylacrylat und Acrylsäure, zusammen mit 10 T Hexamethoxymethylmelamin zugemischt. Das Gemisch wird mit entionisiertem Wasser auf eine Auslaufzeit von 18 s im 4 mm-DIN-Becher eingestellt und auf Stahlbleche (Erichsen-Bleche) gespritzt.

31) Die Lackherstellung erfolgt wie nach Beispiel 12, wobei anschliessend mit entionisiertem Wasser eine Auslaufzeit von 90 s im 4 mm-DIN-Becher eingestellt wird. Das Beschichtungsmaterial wird mittels Aufziehspirale in einer Nassfilmdicke von 100 µm auf phosphatierte Bleche aufgebracht und ohne Ablüftzeit sofort im Umluft-Ofen 1 Minute bei 300°C schockgetrocknet.

41) (2-Schicht-Metalleffektlackierung)

Zunächst wird ein Gemisch von 150 T einer 50%igen Polyesterlösung nach Beispiel 4, 100 T einer 40%igen wässrigen Epoxidlösung nach Beispiel 8 der EP-A-60 506 (entsprechend deutscher Anmeldung P 31 09 900.9) und 29 T Aluminiumpigment hergestellt und mit entionisiertem Wasser auf eine Auslaufzeit von 15 s im 4 mm-DIN-Becher verdünnt.

Diese Lösung wird als Grundschicht in einer Nassschichtdicke von ca. 100 µm auf Stahlblech aufgesprüht und nach ca. 15 Minuten Ablüftungszeit 30 Minuten bei 110°C gehärtet.

Nach Abkühlen der Grundschicht wird eine klare Deckschicht aus einer Mischung von 110 T der 50%igen Polyestermischung nach Beispiel 3 und 15 T Hexamethoxymethylmelamin mit entionisiertem Wasser auf 18 s Auslaufzeit im 4 mm-DIN-Becher eingestellt, auf die Grundschicht aufgesprüht und nach 10 Minuten Ablüftungszeit 30 Minuten bei 140°C gehärtet. Man erhält eine einwandfreie, hochglänzende und kratzfeste 2-Schicht-Metalleffektlackierung.

Tabelle 1

| Beispiel Nr. | Wässrige Polyesterharzlösung 50% | | Wässrige Epoxydlösung | | Melaminharz | Katalysator | |
|---|---|---|---|---|---|---|---|
| | T | gemäss Beispiel | T | nach Beispiel +) | T | T | Struktur |
| 18 | 160 | 1 | 50 | 6 | 30 | | – |
| 19 | 150 | 2 | 50 | 11 | 20 | 0,5 | Cholin |
| 20 | 160 | 3 | 75 | 10 | 30 | 0,5 | LiOH.1 $H_2O$ |
| 21 | 160 | 4 | 50 | 11 | 20 | 1 | Cholin |
| 22 | 145 | 5 | 90 | 8 | | 0,5 | Tetrabutylammoniumhydroxyd |
| 23 | 120 | 3 | 75 | 4 | 30 | | – |
| 24 | 140 | 4 | 75 | 11 | | 0,5 | Tetramethylammoniumhydroxyd |
| 25 | 140 | 4 | | | 30 | | – |
| 26 | 50 | 3 | 62,5 | 1 | 10 | | |
| 27 | 120 | 11 | 37,5 | 8 | 20 | 0,5 | LiOH.1 $H_2O$ |
| 28 | 170 | 10 | 80 | 10 | 15 | | – |
| 29 | 164 | 9 | 53 | 12 | 15 | | – |
| 30 | 160 | 8 | | | 35 | | – |
| 31 | 160 | 3 | 55 | 10 | 30 | 0,5 | LiOH.1 $H_2O$ |
| 32 | 160 | 12 | 50 | 8 | 30 | – | – |
| 33 | 160 | 13 | 50 | 10 | 30 | – | – |
| 34 | 180 | 14 | 25 | 9 | 25 | 1 | Tetrabutylammoniumhydroxyd |
| 35 | 160 | 12 | 50 | 12 | 20 | – | – |
| 36 | 160 | 15 | 50 | 8 | 30 | 1 | p-Toluolsulfonsäure |
| 37 | 160 | 15 | 50 | 8 | 30 | – | – |
| 38 | 160 | 16 | 50 | 10 | 30 | 1 | p-Toluolsulfonsäure |

Tabelle 1 (Fortsetzung)

| Beispiel Nr. | Wässrige Polyesterharzlösung 50% T | gemäss Beispiel | Wässrige Epoxydlösung T | nach Beispiel +) | Melaminharz T | Katalysator T | Struktur |
|---|---|---|---|---|---|---|---|
| 39 | 160 | 16 | 50 | 10 | 30 | – | – |
| 40 | 160 | 17 | 50 | 8 | 30 | – | – |

+) aus den angegebenen Beispielen der Patentanmeldung (entsprechend deutscher Anmeldung P 31 09 900.9)

III) Lacktechnische Prüfung

In Tabelle 2 sind die Härtungsbedingungen und die ermittelten Prüfwerte zusammengestellt.

Zusätzlich zu den in Tabelle 2 aufgeführten Prüfwerten wurden für Beispiel 25 nach der Schockhärtung im T-Bend-Test ein Wert von $T_1$ und eine Bleistifthärte 2 H (ECCA-Norm) ermittelt.

IV) Diskussion der Ergebnisse

Wie die Werte von Tabelle 2 zeigen, liefern alle Beispiele Überzüge mit guten lacktechnischen Eigenschaften, je nach der gewählten Kombination von Polyestern und Polyepoxyd erhält man eine sehr hohe Oberflächenhärte (siehe Beispiele 20, 25, 30, 32, 33, 38) und sehr hohe Vernetzungsdichte und damit auch eine hohe chemische Beständigkeit (siehe Beispiele 20, 25, 31 und 35). Weiter zeigen die Werte für alle vernetzten Proben eine gute Schlagverformbarkeit, die bei speziellen Kombinationen aussergewöhnlich hoch ist (siehe Beispiele 24, 27, 31, 36, 37 und 39). Trotz einer Härtungszeit von nur 1 Minute erhält man nach Beispiel 25 Überzüge mit hoher Oberflächenhärte und hoher Verformbarkeit.

Tabelle 2

| Beispiel Nr. | Härtungsbedingungen min | Härtungsbedingungen °C | Glanz nach Lange 60°∢ | Pendelhärte nach König s | Beständigkeit gegen Xylol min | Beständigkeit 10%ige NaOH h | Erichsentiefung mm | Schlagtiefung reverse inch. pound. | Gitterschnitt 0 = bester Wert 5 = schlechtester wert |
|---|---|---|---|---|---|---|---|---|---|
| 18 | 30 | 140 | 88 | 135 | 8 | 24 | 9,7 | 40 | 0–1 |
| 19 | 30 | 130 | 86 | 156 | 10 | 20 | 10,2 | 100 | 0 |
| 20 | 30 | 160 | 82 | 192 | >30 | >48 | 8,2 | 60 | 1 |
| 21 | 30 | 90 | 85 | 145 | 11 | 7 | 9,6 | 44 | 0 |
| 22 | 30 | 130 | 82 | 120 | 2 | 2 | 10,5 | 80 | 0–1 |
| 23 | 30 | 160 | 89 | 170 | 12 | 24 | 10,8 | 120 | 0 |
| 24 | 30 | 120 | 88 | 160 | 3 | 8 | 9,5 | 160 | 0–1 |
| 25 | 20 | 150 | 87 | 179 | >30 | 24 | 8,7 | 100 | 0 |
| 26 | 30 | 140 | 88 | 160 | 20 | >72 | 8,0 | 20 | 1 |
| 27 | 30 | 130 | 82 | 135 | 25 | 6 | 10,1 | 140 | 0 |
| 28 | 30 | 140 | 87 | 181 | 21 | 48 | 9,7 | 60 | 0–1 |
| 29 | 30 | 160 | 85 | 157 | 25 | 36 | 7,9 | 40 | 1 |
| 30 | 30 | 150 | 88 | 189 | 30 | 48 | 8,3 | 60 | 1 |
| 31 | 1 | 300 | 82 | 169 | >30 | 36 | Blechriss | 160 | 0–1 |
| 32 | 30 | 140 | 86 | 187 | 15 | 24 | 9,6 | 80 | 0 |
| 33 | 30 | 140 | 88 | 185 | 18 | 22 | 9,1 | 80 | 1 |
| 34 | 30 | 140 | 89 | 134 | 12 | 24 | 8,7 | 60 | 0–1 |
| 35 | 30 | 140 | 83 | 191 | >30 | >48 | 6,5 | 20 | 2 |
| 36 | 30 | 140 | 83 | 174 | 20 | 36 | 8,5 | 140 | 1 |
| 37 | 30 | 140 | 87 | 162 | 12 | 24 | 9,8 | 160 | 0 |
| 38 | 30 | 140 | 81 | 179 | 22 | 20 | 7,2 | 120 | 1 |
| 39 | 30 | 140 | 82 | 165 | 14 | 18 | 8,9 | 140 | 0 |
| 40 | 30 | 140 | 89 | 181 | 16 | 24 | 9,1 | 80 | 0 |

**Patentansprüche** für die Vertragsstaaten: BE, CH, DE, FR, GB, LI, NL

1) Mit Wasser verdünnbarer Polyester mit guter Hydrolysebeständigkeit auf der Basis von

A) mindestens einer Dicarbonsäureeinheit,
B) mindestens einem Polycarbonsäuremonoanhydrid und
C) mindestens einer Alkohol-Komponente, die mindestens einen mindestens zweiwertigen Alkohol aufweist,

wobei die COOH-Gruppen des Polyesters zumindest teilweise als Ammoniumsalze vorliegen, dadurch gekennzeichnet, dass der hydrolysebeständige Polyester zusätzlich von
D) mindestens einer Epoxydverbindung, die mindestens zwei Oxiranringe enthält, der Gruppe epoxydierte Fettsäuren, deren Derivate und epoxydierte aliphatische Kohlenwasserstoffe oder deren Gemischen mit Monoepoxiden abgeleitet ist und dass das Polycarbonsäuremonoanhydrid B) in Form eines Halbesters eingebaut ist und von Phthalsäureanhydrid und Maleinsäureanhydrid verschieden ist.

2) Polyester nach Anspruch 1, dadurch gekennzeichnet, dass ein Anteil von mindestens 50%, vorzugsweise mindestens 80%, der Epoxydgruppen der Komponente D) verestert ist.

3) Verfahren zur Herstellung der Polyester nach Anspruch 1 oder 2, dadurch gekennzeichnet, dass

a) in erster Stufe ein Polyester mit einer Säurezahl von 2 bis 100, vorzugsweise 2 bis 30 aus einer Säurekomponente, die A) mindestens eine Dicarbonsäurekomponente enthält, D) mindestens einer Epoxydverbindung, die mindestens zwei Oxiranringe enthält, der Gruppe epoxydierte Fettsäuren, deren Derivate und epoxydierte aliphatische Kohlenwasserstoffe oder Gemischen davon mit Monoepoxyden und C) mindestens einer Alkoholkomponente, die mindestens einen mindestens zweiwertigen Alkohol enthält, hergestellt wird,

b) dass darauf der Polyester, sofern er eine Säurezahl von mindestens 15 hat, in zweiter Stufe mit einem Monoepoxyd und/oder mit einem Polyepoxyd, das neben den Epoxydgruppen noch mindestens eine Estergruppe aufweist, unter Bildung eines Polyesters mit einer Säurezahl von weniger als 15, und sofern er schon eine Säurezahl von weniger als 15 hat, in zweiter Stufe gegebenenfalls mit einem Monoepoxyd und/oder einem Polyepoxyd, das neben den Epoxydgruppen noch mindestens eine Estergruppe aufweist, umgesetzt wird,

c) dass der in erster oder zweiter Stufe gebildete Polyester mit einer Säurezahl von weniger als 15 mit B) mindestens einem anderen Polycarbonsäuremonoanhydrid als Phthalsäureanhydrid und Maleinsäureanhydrid bei einer Temperatur von Raumtemperatur bis 170°C vorzugsweise 50 bis 140°C unter Bildung eines Halbesters des Monoanhydrids umgesetzt wird,

d) dass in einer weiteren Stufe die freien COOH-Gruppen des gebildeten Halbesters mit einem Amin, vorzugsweise einem tertiären Amin oder tertiären Aminoalkohol, in das entsprechende Ammoniumsalz überführt werden, und

e) dass darauf das unter d) erhaltene Produkt als solches gewonnen oder in einer weiteren Stufe mit einem Lösungsmittel, vorzugsweise Wasser, verdünnt wird.

4) Verfahren nach Anspruch 3, dadurch gekennzeichnet, dass in Stufe c) mit Trimellithsäureanhydrid und/oder mit einem zumindest teilweise hydrierten Anhydrid einer aromatischen Dicarbonsäure als Komponente B) umgesetzt wird.

5) Verfahren nach Anspruch 3 oder 4, dadurch gekennzeichnet, dass die Polyesterkondensation in Stufe a) bei einer Temperatur von mindestens 170°C,vorzugsweise 190 bis 230°C, durchgeführt wird.

6) Verfahren nach einem oder mehreren der Ansprüche 3 bis 5, dadurch gekennzeichnet, dass in erster Stufe ein Polyester aus der Säurekomponente und der Alkoholkomponente, jeweils gemäss Merkmal a) und einem solchen Anteil der Epoxydverbindung D) in Form eines Polyepoxyds, das neben den Epoxydgruppen noch mindestens eine Estergruppe aufweist, allein oder im Gemisch mit mindestens einem Monoepoxyd hergestellt wird, wobei ein Polyester einer Säurezahl von weniger als 15 gebildet wird, worauf man das Verfahren – unter Weglassen der Stufe b) – in Stufe c) weiterführt.

7) Verwendung des Polyesters nach einem oder mehreren der Ansprüche 1 oder 2 bzw. des nach dem Verfahren nach einem oder mehreren der Ansprüche 3 bis 6 erhaltenen Produkts als Zusatzstoff zu oder Bindemittel in wässrigen oder in mit Wasser verträglichen Medien, insbesondere für Anstrichmittel oder Überzüge für sich oder in Kombination mit wasserverdünnbaren Aminharzen und/oder wasserverdünnbaren Epoxyden, vorzugsweise Polyepoxyden,

8) Verwendung des Polyesters nach Anspruch 7, in Kombination mit wasserverdünnbaren Epoxyden, die frei von Glycidylester- und -äthergruppen sind und ausser mindestens einer Epoxydgruppe mindestens eine Estergruppe einer Monocarbonsäure und eine dieser benachbarte weitere Estergruppe enthalten, die durch Umsetzung einer OH-Gruppe mit einem Polycarbonsäuremonoanhydrid entstanden ist, wobei die aus dem Anhydrid bei der Veresterung gebildete zweite COOH-Gruppe ganz oder teilweise in Form eines Salzes einer Base vorliegt, allein oder im Gemisch mit wasserverdünnbaren Aminharzen.

9) Verwendung des Polyesters nach Anspruch 7 oder 8 für sich oder in Kombination mit Polymerisatdispersionen zur Herstellung von gehärteten Überzügen, insbesondere von solchen, die über 60°C eingebrannt werden.

10) Ausführungsform nach einem oder mehreren der Ansprüche 1 bis 9, dadurch gekennzeichnet, dass der Polyester auf der Basis eines Gemisches von Epoxydverbindungen, das bis zu 30% eines Monoepoxyds enthält, hergestellt ist, wobei die Prozentangabe auf Epoxydgruppen bezogen ist.

11) Ausführungsform nach einem oder mehreren der Ansprüche 1 bis 10, dadurch gekennzeichnet, dass die Dicarbonsäurekomponente des Polyesters zusätzlich noch mindestens eine Monocarbonsäure enthält.

**Patentansprüche** für den Vertragsstaat: AT

1) Verfahren zur Herstellung von mit Wasser verdünnbaren Polyestern mit guter Hydrolysebeständigkeit auf der Basis von

A) mindestens einer Dicarbonsäureeinheit,
B) mindestens einem Polycarbonsäuremonoanhydrid und
C) mindestens einer Alkohol-Komponente, die mindestens einen mindestens zweiwertigen Alkohol aufweist,

wobei die COOH-Gruppen des Polyesters zumindest teilweise als Ammoniumsalze vorliegen, dadurch gekennzeichnet, dass

a) in erster Stufe ein Polyester mit einer Säurezahl von 2 bis 100 aus einer Säurekomponente, die A) mindestens eine Dicarbonsäure enthält, D) mindestens einer Epoxydverbindung, die mindestens zwei Oxiranringe enthält, der Gruppe epoxydierte Fettsäuren, deren Derivate und epoxydierte aliphatische Kohlenwasserstoffe, Gemische davon mit Monoepoxyden und C) mindestens einer Alkoholkomponente, die mindestens einen mindestens zweiwertigen Alkohol enthält, hergestellt wird,

b) dass darauf der Polyester, sofern er eine Säurezahl von mindestens 15 hat, in zweiter Stufe mit einem Monoepoxyd und/oder mit einem Polyepoxyd, das neben den Epoxydgruppen noch mindestens eine Estergruppe aufweist, unter Bildung eines Polyesters mit einer Säurezahl von weniger als 15, und sofern er schon eine Säurezahl von weniger als 15 hat, in zweiter Stufe gegebenenfalls mit einem Monoepoxyd und/oder einem Polyepoxyd, das neben den Epoxydgruppen noch mindestens eine Estergruppe aufweist, umgesetzt wird,

c) dass der in erster oder zweiter Stufe gebildete Polyester mit einer Säurezahl von weniger als 15 mit B) mindestens einem anderen Polycarbonsäuremonoanhydrid als Phthalsäureanhydrid und Maleinsäureanhydrid bei einer Temperatur von Raumtemperatur bis 170°C unter Bildung eines Halbesters des Monoanhydrids umgesetzt wird,

d) dass in einer weiteren Stufe die freien COOH-Gruppen des gebildeten Halbesters mit einem Amin in das entsprechende Ammoniumsalz übergeführt werden, und

e) dass darauf das unter d) erhaltene Produkt als solches gewonnen oder in einer weiteren Stufe mit einem Lösungsmittel verdünnt wird.

2) Verfahren nach Anspruch 1, dadurch gekennzeichnet, dass in Stufe c) mit Trimellithsäureanhydrid und/oder mit einem zumindest teilweise hydrierten Anhydrid einer aromatischen Dicarbonsäure als Komponente B) umgesetzt wird.

3) Verfahren nach Anspruch 1 oder 2, gekennzeichnet durch wenigstens eine der Massnahmen, dass die Polyesterkondensation in Stufe a) bei einer Temperatur von mindestens 170°C, vorzugsweise 190 bis 230°C, durchgeführt wird, dass in Stufe a) ein Polyester mit einer Säurezahl von 2 bis 30 hergestellt wird, dass die Reaktion in Stufe c) bei 50 bis 140°C durchgeführt wird, dass in Stufe d) ein tertiäres Amin oder ein tertiärer Aminoalkohol verwendet wird, dass das Lösungsmittel unter e) Wasser ist.

4) Verfahren nach einem oder mehreren der Ansprüche 1 bis 3, dadurch gekennzeichnet, dass in erster Stufe ein Polyester aus der Säurekomponente und der Alkoholkomponente, jeweils gemäss Merkmal a), und einem solchen Anteil der Epoxydverbindung D) in Form eines Polyepoxyds, das neben den Epoxydgruppen noch mindestens eine Estergruppe aufweist, allein oder im Gemisch mit mindestens einem Monoepoxyd hergestellt wird, wobei ein Polyester einer Säurezahl von weniger als 15 gebildet wird, worauf man das Verfahren – unter Weglassen der Stufe b) – in Stufe c) weiterführt.

5) Verfahren nach einem oder mehreren der Ansprüche 1 bis 4, dadurch gekennzeichnet, dass ein Anteil von mindestens 50%, vorzugsweise mindestens 80%, der Epoxydgruppen der Komponente D) verestert wird.

6) Verfahren nach einem oder mehreren der Ansprüche 1 bis 5, dadurch gekennzeichnet, dass zusätzlich mindestens ein Monoepoxyd eingebaut wird.

7) Verfahren nach einem oder mehreren der Ansprüche 1 bis 6, dadurch gekennzeichnet, dass der Polyester auf der Basis eines Gemisches von Epoxydverbindungen, das bis zu 30% eines Monoepoxyds enthält, hergestellt wird, wobei die Prozentangabe auf Epoxydgruppen bezogen ist.

8) Verwendung des nach einem oder mehreren der Ansprüche 1 bis 7 erhaltenen Polyesters als Zusatzstoff zu oder Bindemittel in wässrigen oder mit Wasser verträglichen Medien, insbesondere für Anstrichmittel oder Überzüge für sich oder in Kombination mit wasserverdünnbaren Aminharzen und/oder wasserverdünnbaren Epoxyden, vorzugsweise Polyepoxyden.

9) Verwendung des Polyesters nach Anspruch 8 in Kombination mit wasserverdünnbaren Epoxyden, die frei von Glycidylester- und -äthergruppen sind und ausser mindestens einer Epoxydgruppe mindestens eine Estergruppe einer Monocarbonsäure und eine dieser benachbarte weitere Estergruppe enthalten, die durch Umsetzung einer OH-Gruppe mit einem Polycarbonsäuremonoanhydrid entstanden ist, wobei die aus dem Anhydrid bei der Veresterung gebildete zweite COOH-Gruppe ganz oder teilweise in Form eines

Salzes einer Base vorliegt, allein oder im Gemisch mit wasserverdünnbaren Aminharzen.

10) Verwendung des Polyesters nach Anspruch 8 oder 9 für sich oder in Kombination mit Polymerisatdispersionen zur Herstellung von gehärteten Überzügen, insbesondere von solchen, die über 60°C eingebrannt werden.

11) Ausführungsform nach einem oder mehreren der Ansprüche 1 bis 10, dadurch gekennzeichnet, dass die Dicarbonsäurekomponente des Polyesters zusätzlich noch mindestens eine Monocarbonsäure enthält.

**Claims** for the Contracting States: BE CH DE FR GB LI NL

1) A water dilutable polyester having a good resistance to hydrolysis based on

A) at least one dicarboxylic acid unit,
B) at least one polycarboxylic monoanhydride and
C) at least one alcohol component containing at least one at least dihydric alcohol,

the COOH groups of the polyester being at least partially present in the form of salts with amine, characterised in that the polyester, resistant to hydrolysis is also derived from
D) at least one epoxy compound which contains at least two oxiran rings and is selected from the group consisting of epoxidised fatty acids, derivatives thereof and epoxidised aliphatic hydrocarbons or mixtures thereof with monoepoxides, and in that the polycarboxylic monoanhydride B) is incorporated in the form of a half ester and is other than phthalic anhydride and maleic anhydride.

2) A polyester as claimed in claim 1, characterised in that at least 50%, preferably at least 80% of the epoxy groups of component D) are esterified.

3) A process for the preparation of a polyester as claimed in claim 1 or 2, characterised in that
a) in a first step, a polyester with an acid number of from 2 to 100, preferably from 2 to 30 is prepared from an acid component which contains A) at least one dicarboxylic acid component, D) at least one epoxy compound which contains at least two oxiran rings, selected from the group consisting of epoxidised fatty acids, the derivatives thereof and epoxidised aliphatic hydrocarbons or mixtures thereof with monoepoxides, and C) at least one alcohol component which contains at least one at least dihydric alcohol,

b) then, in a second step, if the polyester has an acid number of at least 15, it is reacted with a monoepoxide and/or with a polyepoxide which contains, in addition to the epoxide groups, at least one ester group, to form a polyester with an acid number of less than 15, and if the polyester already has an acid number of less than 15, it is optionally reacted in a second step with a monoepoxide and/or a polyepoxide, which contains, in addition to the epoxy groups, at least one ester group,

c) the polyester formed in the first or second step, and having an acid number of less than 15 is reacted with B) at least one polycarboxylic monoanhydride other than phthalic anhydride and maleic anhydride, at a temperature of from ambient temperature to 170°C, preferably from 50–140°C, to form a half ester of the monoanhydride,

d) in a further step, the free COOH groups of the half ester formed are converted into the corresponding salt with an amine, preferably a tertiary amine or tertiary aminalcohol, and

e) the product obtained in d) is recovered as such or is diluted in a further step with a solvent, preferably water.

4) A process as claimed in claim 3, characterised in that in step c) the reaction is effected with trimellitic anhydride and/or with an at least partially hydrogenated anhydride of an aromatic dicarboxylic acid as component B).

5) A process as claimed in claim 3 or 4, characterised in that the condensation of the polyester in step a) is effected at a temeperature of at least 170°C, preferably 190–230°C.

6) A process as claimed in one or more of claims 3 to 5, characterised in that, in the first step, a polyester is prepared from the acid component and the alcohol component, according to step a), and a quantity of the epoxy compound D) in the form of a polyepoxide which contains in addition to the epoxide groups at least one ester group, either alone or in admixture with at least one monoepoxide, to form a polyester with an acid number of less than 15, and then the process is continued as in step c), omitting step b).

7) Use of a polyester as claimed in one of claims 1 or 2 or of a product obtained by a process as claimed in one or more of claims 3 to 6, as a binder in aqueous or water-miscible media, particularly for paints or coatings either alone or combined with water-dilutable amine resins and/or water-dilutable epoxides, preferably polyepoxides.

8) Use as claimed in claim 7, in conjunction with water-dilutable epoxides which are free from glycidyl ester and glycidyl ether groups and contain, in addition to at least one epoxide group, at least one ester group of a monocarboxylic acid and a further ester group vicinally arranged thereto, this further ester group having been obtained by reacting an OH group with a polycarboxylic monoanhydride, whilst the second COOH group formed from the anhydride during esterification is present completely or partially in the form of a salt with a base, either alone or in admixture with water-dilutable amine resins.

9) Use as claimed in claim 7 or 8 either alone or in combination with polymer dispersions for the preparation of hardened coatings, particularly those which are stoved at above 60°C.

10) Embodiment as claimed in one or more of claims 1 to 9, characterised in that the polyester is prepared as the basis of a mixture of epoxy compounds containing up to 30% of a monoepoxide, the percentage being based on the epoxy groups.

11) Embodiment as claimed in one or more of claims 1 to 10, characterised in that the dicarboxylic acid component of the polyester contains additionally at least one monocarboxylic acid.

**Claims for the Contracting State:** AT

1. A process for the preparation of water-dilutable polyesters having a good resistance to hydrolysis based on

A) at least one dicarboxylic acid unit,
B) at least one polycarboxylic monoanhydride and
C) at least one alcohol component containing at least one at least dihydric alcohol,

the COOH groups of the polyester being at least partially present in the form of ammonium salts, characterised in that

a) in a first step, a polyester with an acid number of from 2 to 100, is prepared from an acid component which contains A) at least one dicarboxylic acid component, D) at least one epoxy compound which contains at least two oxiran rings, selected from the group consisting of epoxidised fatty acids, the derivatives thereof and epoxidised aliphatic hydrocarbons or mixtures thereof with monoepoxides, and C) at least one alcohol component which contains at least one at least dihydric alcohol,

b) then, in a second step, if the polyester has an acid number of at least 15, it is reacted with a monoepoxide and/or with a polyepoxide which contains, in addition to the epoxide groups, at least one ester group, to form a polyester with an acid number of less than 15, and if the polyester already has an acid number of less than 15, it is optionally reacted in a second step with a monoepoxide and/or a polyepoxide, which contains, in addition to the epoxy groups, at least one ester group,

c) the polyester formed in the first or second step, and having an acid number of less than 15 is reacted with B) at least one polycarboxylic monoanhydride other than phthalic anhydride and maleic anhydride, at a temperature of from ambient temperature to 170°C, to form a half ester of the monoanhydride,

d) in a further step, the free COOH groups of the half ester formed are converted with an amine into the corresponding ammonium salt, and

e) the product obtained in d) is recovered as such or is diluted in a further step with a solvent.

2. A process as claimed in claim 1, characterised in that in step c) the reaction is effected with trimellitic anhydride and/or with an at least partially hydrogenated anhydride of an aromatic dicarboxylic acid as component B).

3. A process as claimed in claim 1 or 2, characterised in that the condensation of the polyester in step a) is effected at a temperature of at least 170°C, preferably 190°-230°C, that in step a) a polyester is formed having an acid number of from 2 to 30, that the reaction in step c) is effected at 50 to 140°C, that a tertiary amine or a tertiary aminoalcohol is used in step d) and that the solvent under e) is water.

4. A process as claimed in one or more of claims 1 to 3, characterised in that, in the first step, a polyester is prepared from the acid component and the alcohol component, according to step a), and a quantity of the epoxy compound D) in the form of a polyepoxide which contains in addition to the epoxide groups at least one ester group, either alone or in admixture with at least one monoepoxide, to form a polyester with an acid number of less than 15, and then the process is continued as in step c), omitting step b).

5. A process as claimed in one or more of claims 1 to 4, characterised in that at least 50%, preferably at least 80% of the epoxy groups of component D) are esterified.

6. A process as claimed in one or more of claims 1 to 5, characterised in that additionally at least monoepoxide is incorporated.

7. A process as claimed in one or more of claims 1 to 6, characterised in that the polyester is prepared as the basis of a mixture of epoxy compounds containing up to 30% of a monoepoxide, the percentage being based on the epoxy groups.

8. Use of the polyester obtained according to one or more of claims 1 to 7 as an additive to or a binder in aqueous or water-miscible media, particularly for paints or coatings either alone or combined with water-dilutable amine resins and/or water-dilutable epoxides, preferably polyepoxides.

9. Use of the polyester according to claim 8, in conjunction with water-dilutable epoxides which are free from glycidyl ester and glycidyl ether groups and contain, in addition to at least one epoxide group, at least one estergroup of a monocarboxylic acid and a further ester group vicinally arranged thereto, this further ester group having been obtained by reacting an OH group with a polycarboxylic monoanhydride, whilst the second COOH group formed from the anhydride during esterification is present completely or partially in the form of a salt with a base, either alone or in admixture with water-dilutable amine resins.

10. Use of the polyester according to claim 8 or 9 either alone or in combination with polymer dispersions for the preparation of hardened coatings, particularly those which are stoved at above 60°C.

11. Embodiment as claimed in one or more of claims 1 to 10, characterised in that the dicarboxylic acid component of the polyester contains aditionally at least one monocarboxylic acid.

**Revendications** pour les Etats contractants: BE CH DE FR GB LI NL

1. Polyester qui peut être dilué par de l'eau et

qui a une bonne stabilité à l'hydrolyse, à base:

A) d'au moins un motif acide dicarboxylique,
B) d'au moins un mono-anhydride d'acide polycarboxylique et
C) d'au moins une composante alcool qui contient au moins un alcool à au moins deux radicaux hydroxy alcooliques,

les radicaux -COOH libres du polyester étant au moins partiellement sous la forme de sels d'ammoniums, polyester caractérisé en ce qu'il dérive en outre:
D) d'au moins un composé époxydique renfermant au moins deux noyaux d'oxiranne et appartenant à l'ensemble constitué par les acides gras époxydés, leurs dérivés et les hydrocarbures aliphatiques époxydés, ou de leurs mélanges avec des mono-époxydes, et en ce que le mono-anhydride d'acide polycarboxylique B) est incorporé sous la forme d'un hémi-ester et n'est ni l'anhydride ni l'anhydride maléique phtalique.

2. Polyester selon la revendication 1, caractérisé en ce qu'une proportion d'au moins 50%, de préférence d'au moins 80%, des radicaux époxy de la composante D) est estérifiée.

3. Procédé de préparation des polyesters selon l'une des revendications 1 et 2, caractérisé en ce que:

a) dans une première étape on prépare un polyester ayant un indice d'acide de 2 à 100, de préférence de 2 à 30, à partir A) d'une composante acide qui renferme au moins une composante acide dicarboxylique, D) d'au moins un composé époxydique renfermant au moins deux noyaux d'oxiranne et appartenant à l'ensemble constitué par les acides gras époxydés, leurs dérivés et les hydrocarbures aliphatiques époxydés, ou de mélanges de ceux-ci avec des mono-époxydes, et C) d'au moins une composante alcoolique qui contient au moins un alcool à au moins deux radicaux hydroxy alcooliques,

b) on fait réagir le polyester, dans une seconde étape, dans la mesure où son indice d'acide est au moins égal à 15, avec un mono-époxyde, et/ou avec un polyépoxyde qui, en plus des radicaux époxy, contient encore au moins un radical d'ester, de manière à obtenir un polyester ayant un indice d'acide inférieur à 15, et, lorsque son indice d'acide est déjà inférieur à 15, on le fait éventuellement réagir, dans une seconde étape, avec un mono-époxyde et/ou un poly-époxyde qui, en plus des radicaux époxy, contient encore au moins un radical d'ester,

c) on fait réagir le polyester d'indice d'acide inférieur à 15, qui a été formé dans la première ou la seconde étape, avec B) au moins un mono-anhydride d'acide polycarboxylique autre que l'anhydride phtalique et l'anhydride maléique, à une température comprise entre la température ambiante et 170°C, de préférence entre 50 et 140°C, réaction qui donne naissance à un hémi-ester du monoanhydride,

d) dans une autre étape on convertit les radicaux -COOH libres de l'hémi-ester formé, par réaction avec une amine, de préférence une amine tertiaire ou un amino-alcool tertiaire, en le sel d'ammonium correspondant, et

e) on isole ensuite tel quel le produit formé sous d) ou on le dilue, dans une étape supplémentaire, avec un solvant, de préférence avec de l'eau.

4. Procédé selon la revendication 3 caractérisé en ce qu'on effectue la réaction de l'étape c) en utilisant, comme composante B), l'anhydride trimellitique et/ou un anhydride d'acide dicarboxylique aromatique au moins partiellement hydrogéné.

5. Procédé selon l'une des revendications 3 et 4, caractérisé en ce que la condensation conduisant au polyester, dans l'étape a), est effectuée à une température d'au moins 170°C, de préférence de 190 à 230°C.

6. Procédé selon une ou plusieurs des revendications 3 à 5, procédé caractérisé en ce qu'on prépare, dans la première étape, un polyester à partir de la composante acide et de la composante alcoolique, chacune ayant les particularités indiquées sous a), et d'une proportion appropriée du composé époxydique D) sous la forme d'un polyépoxyde qui, en plus des radicaux époxy, renferme au moins un radical d'ester, seul ou en mélange avec au moins un monoépoxyde, de telle façon qu'il se forme un polyester ayant un indice d'acide inférieur à 15, après quoi on poursuit l'exécution du procédé en sautant l'étape b) et en passant à l'étape c).

7. Application du polyester selon une des revendications 1 et 2 ou les deux, ou du produit obtenu par le procédé selon une ou plusieurs des revendications 3 à 6, comme additif ou comme liant dans des milieux aqueux ou compatibles avec l'eau, plus spécialement pour des peintures ou des produits de revêtements, isolément ou en association avec des résines d'amines diluables à l'eau et/ou des époxydes diluables à l'eau, de préférence des polyépoxydes.

8. Application du polyester selon la revendication 7, en association avec des époxydes diluables à l'eau qui ne contiennent ni radicaux d'esters glycidyliques ni radicaux d'éthers glycidyliques et qui renferment, en plus d'au moins un radical époxy, au moins un radical d'ester d'acide monocarboxylique et, voisin de celui-ci, un autre radical d'ester formé par réaction d'un radical -OH avec un monoanhydride d'acide polycarboxylique, le second radical -COOH formé à partir de l'anhydride lors de l'estérification étant totalement ou partiellement salifié par une base, seul ou en mélange avec des résines d'amines diluables à l'eau.

9. Application du polyester selon l'une des revendications 7 et 8, seul ou en association avec des dispersions de polymères, pour la confection de revêtements durcis, plus spécialement de revêtements qui sont cuits à des températures supérieures à 60°C.

10. Mode d'exécution selon une ou plusieurs

des revendications 1 à 9, caractérisé en ce que le polyester est préparé à partir d'un mélange de composés époxydiques contenant au maximum 30% d'un mono-époxyde, relativement aux radicaux époxy.

11. Mode d'exécution selon une ou plusieurs des revendications 1 à 10, caractérisé en ce que la composante acide dicarboxylique du polyester contient en outre au moins un acide monocarboxylique.

**Revendications pour l'Etat contractant:** AT

1. Procédé de préparation de polyesters diluables à l'eau et ayant une bonne stabilité à l'hydrolyse, à base:

A) d'au moins un motif d'acide dicarboxylique,

B) d'au moins un mono-anhydride d'acide polycarboxylique et

C) d'au moins une composante alcoolique renfermant au moins un alcool à au moins deux radicaux hydroxyalcoolique, les radicaux -COOH du polyester se trouvant, au moins partiellement, à l'état de sels d'ammoniums, procédé caractérisé en ce que:

a) dans une première étape on prépare un polyester ayant un indice d'acide de 2 à 100, à partir A) d'une composante acide qui renferme au moins une composante acide dicarboxylique, D) d'au moins un composé époxydique renfermant au moins deux noyaux d'oxiranne et appartenant à l'ensemble constitué par les acides gras époxydés, leurs dérivés et les hydrocarbures aliphatiques époxydés, de mélanges de ceux-ci avec des mono-époxydes, et C) d'au moins une composante alcoolique qui contient au moins un alcool à au moins deux radicaux hydroxy alcooliques,

b) on fait réagir le polyester, dans une seconde étape, dans la mesure où son indice d'acide est au moins égal à 15, avec un mono-époxyde et/ou avec un polyépoxyde qui, en plus des radicaux époxy, contient encore au moins un radical d'ester, de telle sorte qu'il se forme un polyester ayant un indice d'acide inférieur à 15, et, lorsque son indice d'acide est déjà inférieur à 15, on le fait éventuellement réagir, dans une seconde étape, avec un mono-époxyde et/ou un poly-époxyde qui, en plus des radicaux époxy, contient encore au moins un radical d'ester,

c) on fait réagir le polyester d'indice d'acide inférieur à 15, qui a été formé dans la première ou la seconde étape, avec B) au moins un mono-anhydride d'acide polycarboxylique autre que l'anhydride phtalique et l'anhydride maléique, à une température comprise entre la température ambiante et 170°C, réaction qui donne naissance à un hémi-ester du mono-anhydride,

d) dans une autre étape on convertit les radicaux -COOH libres de l'hémi-ester formé, par réaction avec une amine, en le sel d'ammonium correspondant, et

e) on isole ensuite tel quel le produit formé sous d) ou on le dilue, dans une étape supplémentaire, avec un solvant.

2. Procédé selon la revendication 1, caractérisé en ce qu'on utilise, comme composante B) dans la réaction de l'étape c), l'anhydride trimellitique et/ou un anhydride d'acide dicarboxylique aromatique au moins partiellement hydrogéné.

3. Procédé selon l'une des revendications 1 et 2, qui présente au moins l'une des particularités suivantes: la condensation conduisant au polyester, dans l'étape a), est exécutée à une température d'au moins 170°C, de préférence de 190 à 230°C; dans l'étape a) on prépare un polyester ayant un indice d'acide de 2 à 30; la réaction de l'étape c) est effectuée à une température de 50 à 140°C; dans l'étape d) on utilise une amine tertiaire ou un amino-alcool tertiaire; le solvant utilisé à l'étape e) est l'eau.

4. Procédé selon une ou plusieurs des revendications 1 à 3, caractérisé en ce qu'on prépare, dans la première étape, un polyester à partir de la composante acide et de la composante alcoolique, chacune ayant les particularités indiquées sous a), et d'une proportion appropriée du composé époxydique D) sous la forme d'un polyépoxyde qui, en plus des radicaux époxy, renferme au moins un radical d'ester, seul ou en mélange avec au moins un mono-époxyde, de telle façon qu'il se forme un polyester ayant un indice d'acide inférieur à 15, après quoi on poursuit l'exécution du procédé en sautant l'étape b) et en passant à l'étape c).

5. Procédé selon une ou plusieurs des revendications 1 à 4, caractérisé en ce qu'on estérifie une proportion d'au moins 50% des radicaux époxy de la composante D), de préférence d'au moins 80%.

6. Procédé selon une ou plusieurs des revendications 1 à 5, caractérisé en ce qu'on incorpore en supplément au moins un mono-époxyde.

7. Procédé selon une ou plusieurs des revendications 1 à 6, caractérisé en ce qu'on prépare le polyester à partir d'un mélange de composés époxydiques contenant au plus 30% d'un mono-époxyde, relativement aux radicaux époxy.

8. Application du polyester obtenu selon une ou plusieurs des revendications 1 à 7, comme additif ou comme liant dans des milieux aqueux ou compatibles avec l'eau, plus spécialement pour des peintures ou des produits de revêtement, isolément ou en association avec des résines d'amines diluables à l'eau et/ou des époxydes diluables à l'eau, de préférence des polyépoxydes.

9. Application du polyester selon la revendication 8 en association avec des époxydes diluables à l'eau qui ne contiennent ni radicaux d'esters glycidyliques ni radicaux d'éthers glycidyliques et qui renferment, en plus d'au moins un radical époxy, au moins un radical d'ester d'acide monocarboxylique et, voisin de celui-ci, un autre radical d'ester formé par réaction d'un radical -OH avec un mono-anhydride d'acide polycarboxylique, le second radical -COOH formé à partir de l'anhydride lors de l'éstérification étant totalement ou partiellement salifié par une base, seul ou en mélange avec des résines d'amines diluables à l'eau.

10. Application du polyester selon l'une des revendications 8 et 9, isolément ou en association avec des dispersions de polymères pour la confection de revêtements durcis, plus spécialement de revêtements qui sont cuits à des températures supérieures à 60°C.

11. Mode d'exécution selon une ou plusieurs des revendications 1 à 10, caractérisé en ce que la composante acide dicarboxylique du polyester contient, en plus, au moins un acide monocarboxylique.